Europäisches Patentamt

European Patent Office

Office européen des brevets

(19)

(11) Numéro de publication : **0 105 796**
**B1**

(12) FASCICULE DE BREVET EUROPÉEN

(45) Date de publication du fascicule du brevet :
30.07.86

(51) Int. Cl.⁴ : **A 01 K 11/00, G 09 F 3/00**

(21) Numéro de dépôt : **83401898.8**

(22) Date de dépôt : **28.09.83**

(54) **Plaquette d'identité, notamment pour le bétail.**

(30) Priorité : **30.09.82 FR 8216455**

(43) Date de publication de la demande :
**18.04.84 Bulletin 84/16**

(45) Mention de la délivrance du brevet :
**30.07.86 Bulletin 86/31**

(84) Etats contractants désignés :
**AT BE CH DE GB IT LI LU NL SE**

(56) Documents cités :
**EP-A- 0 014 584**
**EP-A- 0 056 533**
**FR-A- 1 360 600**
**US-A- 3 260 007**

(73) Titulaire : **Zmokly, Tadeusz**
**151 Rue Victor Hugo**
**F-93150 Le Blanc-Mesnil (FR)**

(72) Inventeur : **Zmokly, Tadeusz**
**151 Rue Victor Hugo**
**F-93150 Le Blanc-Mesnil (FR)**

(74) Mandataire : **Roger-Petit, Jean-Camille et al**
**OFFICE BLETRY 2, Boulevard de Strasbourg**
**F-75010 Paris (FR)**

EP 0 105 796 B1

## Description

La présente invention a pour objet une plaquette d'identification, notamment pour le bétail, ainsi que pour toutes autres applications de repérage et d'identification de produits industriels ou de leur emballage, formée principalement à partir d'une matière souple, telle que du plastique et susceptible d'être fixée sans effort sur son support, notamment à l'oreille d'un bovin, et de comporter des informations codées, traduisibles et utilisables en informatique.

La plaquette suivant la présente invention est du type de celles constituées d'un élément mâle, qui perfore le support (qui peut être l'oreille d'un bovin) lors de l'opération de pose, et qui se verrouille simultanément à un élément femelle au moyen d'une pince spéciale ; après le retrait de la pince, les deux éléments, mâle et femelle, de la plaquette apparaissent de part et d'autre de l'oreille du bovin.

Elle est tout spécialement agencée pour assurer une excellente fixation à son support, pour laisser des traces apparentes permettant de constater toute tentative de viol ou d'ouverture par force, pour que les informations d'identité qu'elle comporte soient très visibles et bien protégées, et pour qu'après une première utilisation légitime de ces informations d'identité, elle ne puisse pas être utilisée à nouveau pour donner une identité usurpée.

A cet effet, la plaquette d'identité suivant la présente invention est constituée :

a) d'un élément plat, ou plaquette, mâle venu de moulage avec un tube perpendiculaire à l'une de ses faces, le trou cylindrique du tube étant prolongé à travers l'élément mâle et l'extrémité libre du tube portant une pointe conique externe de perçage, en matière plus dure, prolongée par une queue, qui s'encastre dans le trou cylindrique du tube, et est percée axialement d'un trou borgne, qui s'étend jusqu'à proximité d'une gorge circulaire externe disposée à la base de la partie conique de la pointe avant la queue et dans laquelle vient par moulage s'introduire une saillie interne, de profil correspondant, de l'extrémité du tube,

b) et d'un élément plat, ou plaquette, femelle moulée présentant un bossage percé d'un trou borgne à l'orée duquel est placée une rondelle fendue de retenue, de diamètre interne identique à celui du trou borgne, cedit trou borgne étant dimensionné de manière à pouvoir recevoir la pointe de perçage après introduction forcée de cette dernière dans l'élément femelle.

Ces caractéristiques de structure sont connues du Brevet EP-A-0 056 533 et sont énumérées dans le préambule de la revendication.

La plaquette suivant l'invention en diffère par des perfectionnements caractérisés en ce que le tube support de la plaquette mâle présente extérieurement une surface lisse, la base de la partie conique externe de la pointe dure étant de diamètre égal à celui extérieur du tube, ces diamètres égaux étant légèrement supérieurs à celui du trou borgne de l'élément femelle, en ce que le trou borgne de l'élément femelle est cylindrique, dépourvu d'épaulements, et en ce que le profil de la gorge circulaire de la pointe est trapézoïdal.

Les éléments mâle et femelle de cette plaquette ont une forme géométriquement évasée à partir de leur axe d'assemblage, ce qui empêche qu'on puisse les faire repasser par le trou agrandi, créé dans leur support, et notamment dans l'oreille du bétail, lors de leur pose. Ces éléments comportent sur leur surface extérieure des nervures qui offrent une résistance à la déformation et forment un cadre à l'intérieur duquel apparaissent les informations d'identité, pour lesquelles ils assurent une protection : ces informations d'identité sont imprimées directement sur les éléments de la plaquette, en texte, en chiffres, en « code-barre » ou autrement ; ils peuvent aussi être fixés sur ceux-ci, dans ledit cadre, de toutes façons appropriées ; ces informations sont rendues inaccessibles, et protégées de l'érosion par un film de matière plastique appropriée, transparente, soudé sur sa périphérie à l'intérieur du cadre délimité par les nervures.

Un autre mode de protection des informations d'identité consiste à injecter par moulage à chaud, avec les moyens industriels habituels, de la matière plastique transparente qui, en recouvrant les informations d'identité, remplit uniformément l'intérieur de la zone délimitée par les nervures, n'altérant pas la lisibilité ; des perforations peuvent alors être prévues dans les éléments mâle et femelle de la plaquette à l'intérieur du cadre délimité par les nervures, perforations qui seront comblées par le surmoulage de la matière plastique transparente, offrant ainsi des points d'ancrage complémentaires à cette protection ; l'épaisseur de la matière plastique transparente, des informations d'identité, et notamment du code-barre, est choisie de façon que ce code-barre ne soit pas détérioré par des déformations et pliures de la plaquette.

D'autres caractéristiques de l'invention ressortiront de la description qui suit d'un mode de réalisation d'une plaquette, en matière plastique par exemple, suivant la présente invention en référence au dessin annexé dans lequel :

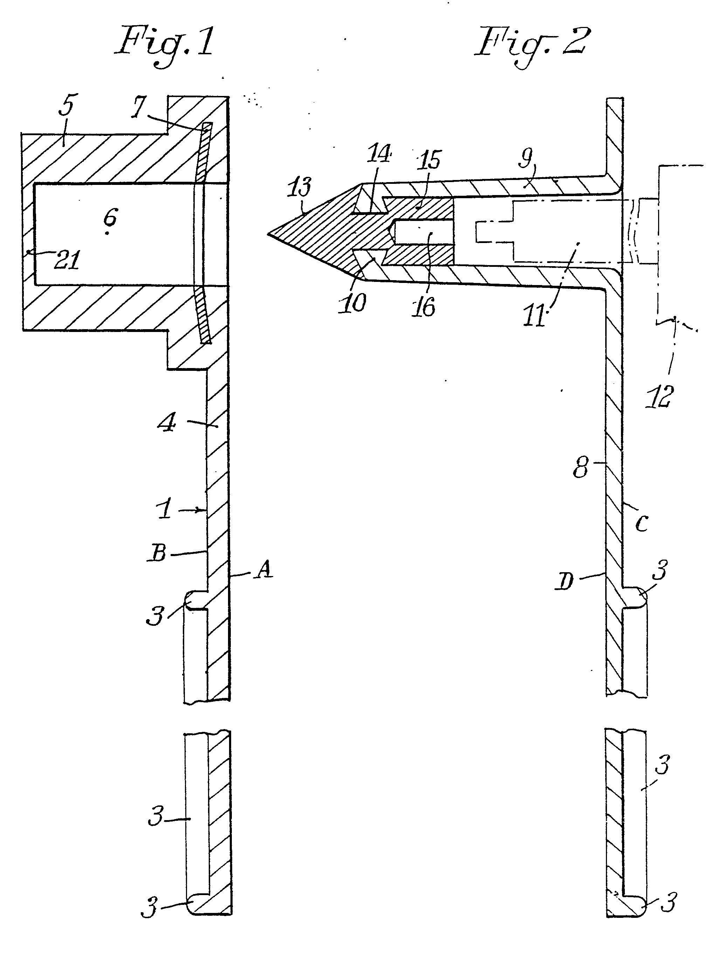

La figure 1 est une vue en coupe de son élément femelle avant assemblage.

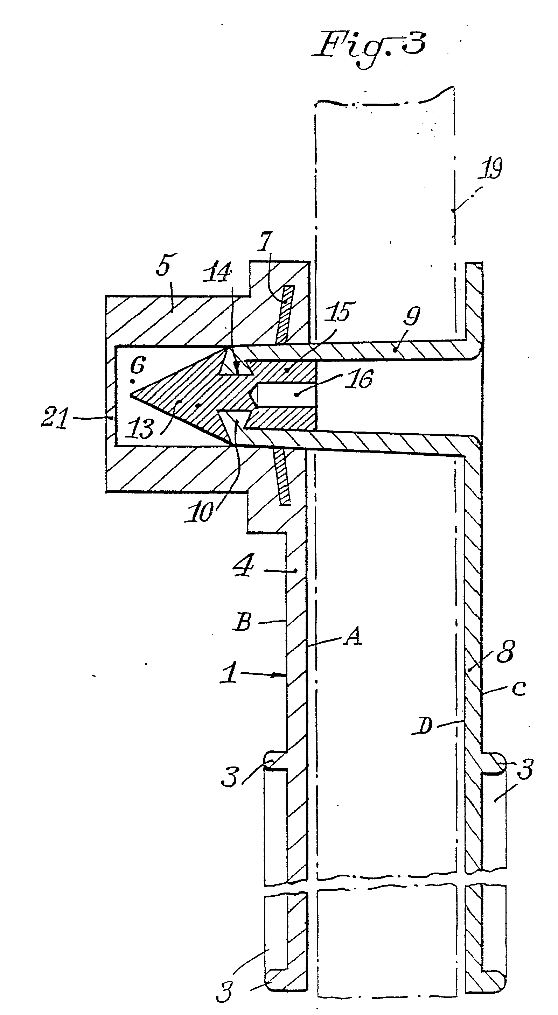

La figure 2 est une vue analogue de son élément mâle.

La figure 3 est une vue en coupe de ces mêmes éléments après assemblage.

La figure 4 est une vue en élévation, à plus petite échelle, d'un élément femelle de plaquette.

La figure 5 est une vue en coupe faite suivant la ligne V-V de la figure 4.

La figure 6 est une vue analogue à celle de la figure 4 montrant une variante.

L'élément femelle de la plaquette 1 est mince et venu de moulage ; sa face A intérieure présente à son sommet un trou cylindrique borgne 6 et sa face B extérieure un bossage cylindrique 5 limitant. ce trou borgne 6.

Dans ce bossage est logée, prise dans la masse, une rondelle de verrouillage fendue 7, en acier, disposée à proximité de l'entrée du trou borgne 6, dont le diamètre est le même que celui du trou de la rondelle 7.

Le fond du trou borgne constitue une membrane 21 dont l'utilité sera expliquée plus loin.

Cet élément femelle 1 comporte une partie 4 évasée, au-dessous de son bossage 5, prolongée par une partie rectangulaire, dans laquelle des nervures 3 de sa face extérieure constituent un cadre rectangulaire délimitant un espace dans lequel devront figurer les informations d'identité.

L'élément mâle 8 de la plaquette, également venu de moulage, est de forme indentique à celle de l'élément femelle 1, ou, éventuellement, plus grand ou plus petit, suivant les nécessités. Des nervures en relief 3 sont disposées de même, sur la face extérieure C, pour recevoir des repères d'identité complémentaires.

Cet élément mâle 8 présente à son sommet, sur sa face extérieure C, l'entrée d'un trou cylindrique constitué par le volume intérieur du tube de liaison 9, mince et souple venu de moulage avec sa partie plane, sur la face intérieure D, perpendiculairement à celle-ci, et comportant une extrémité 10, saillant vers l'intérieur, en profil trapézoïdal circulaire moulé, encastrée dans une gorge 14, de profil correspondant, de la pointe conique 13, préférablement métallique.

La base de cette pointe conique a un diamètre légèrement supérieur à celui du trou borgne 6 de l'élément femelle 1 ; cette pointe 13 comporte, en arrière de sa gorge 14, une queue cylindrique 15 logée dans l'extrémité intérieure du tube de liaison 9, percée d'un trou borgne 16 de faible diamètre, allant jusqu'à proximité de la gorge 14.

Ce trou borgne a une double utilité :

1. Il sert à maintenir dans son prolongement le guide 11 du mors 12 de la pince destinée à fixer cette plaquette à l'oreille d'un bovin, et qui comporte à cet effet une extrémité de plus faible diamètre venant se loger précisément dans ce trou borgne.

2. Il crée une zone de moindre résistance par le peu de métal restant entre le fond du trou borgne 16 et le fond de la gorge profonde 14 et, par conséquent, un point de rupture possible de la pointe dure lorsque des sollicitations violentes sont faites pour forcer l'ouverture de la plaquette ; il évite donc qu'on puisse déchirer l'oreille de l'animal et il permet de laisser une trace apparente en cas de viol.

Un second usage des deux éléments de la plaquette est rendu impossible.

La pose de telles plaquettes se fait de la façon suivante : on dispose sur les mors respectifs de la pince, son élément femelle et son élément mâle ; par serrage rapide on procède à la fixation à travers l'oreille des deux éléments mâle et femelle et à leur assemblage.

La pointe dure 13 de l'élément mâle, guidée par la pince, perce l'oreille 19 du bovin et pénètre dans le trou borgne 6 du bossage 5 de l'élément femelle, traversant à force la rondelle fendue 7 qui y est logée.

Le diamètre intérieur de passage de cette rondelle fendue 7, ainsi que celui du prolongement dans le bossage 5 du trou borgne 6, sont légèrement inférieurs au diamètre de la base de la pointe dure conique 13 du tube de liaison 9 en matière plastique qui la prolonge ; la fermeture de la pince est réglée de façon que la pointe 13 arrive au fond du trou borgne 6 de l'élément femelle sans perforer la membrane 21 qui l'obture. Le verrouillage est correct lorsque la rondelle 7 de l'élément femelle est positionnée au-dessus de la queue cylindrique 15 de la pointe 13, la gorge 14 remplie de matière plastique ayant passé à force à travers la rondelle 7, et celle-ci prenant appui sur la paroi mince en matière plastique du tube de liaison 9.

On a emprisonné ainsi dans la cavité borgne 6 du bossage 5 de l'élément femelle 1, derrière la rondelle fendue 7, la pointe dure 13, sa gorge profonde 14 remplie de matière plastique, et la partie antérieure de la queue cylindrique 15 entourée d'une mince paroi de matière plastique.

Cette mince paroi, qui est dans le prolongement du tube de liaison 9 de l'élément mâle, constitue un second point de rupture, dans le cas d'une forte sollicitation d'ouverture, tentée par une traction tendant à écarter l'un de l'autre les deux éléments de la plaquette, ou par le vrillage du tube de liaison 9, ou par tout autre moyen.

Dans tous les cas, le tube de liaison 9 se déforme, s'allonge et rompt, se séparant de la pointe 13, celle-ci restant enfermée dans le trou borgne 6 de l'élément femelle de la plaquette.

La rondelle fendue joue le rôle de retenue qui lui est propre.

Pour dégager la pointe, la seule possibilité serait de percer la membrane 21 du fond du trou borgne 6 de l'élément femelle ; de toutes façons l'élément mâle 8 est rendu inutilisable par l'allongement du tube de liaison 9 et la rupture de sa pointe 13 reste prisonnière de l'élément femelle 1, et celui-ci est inutilisable par la présence de la pointe obstruant sa cavité borgne ou par la perforation visible de la paroi 21 du trou borgne, prouvant une tentative de viol.

La combinaison de la gorge en profil trapézoïdal circulaire 14 de la pointe métallique 13, avec l'extrémité 10 de forme correspondante du tube de liaison 9, moulée dans cette gorge, assure une liaison pratiquement inséparable de ce tube de liaison avec le prolongement cylindrique 15 de la pointe métallique 13, ce qui fait qu'en cas de traction élevée exercée sur l'élément mâle 8 pour le séparer de l'élément femelle 1, le tube de liaison 9 rompt, et, s'il résiste, la faiblesse créée dans la pointe métallique du fait du peu de métal subsistant entre le fond de la gorge 14 et celui du trou borgne 16 du prolongement cylindrique 15 de la pointe métallique 13, fait que ce prolongement cylindrique se sépare de la pointe 13, qui reste bloquée dans le trou borgne 6 de l'élément femelle 1, qui est rendue inutilisable, comme l'est aussi l'élément mâle 8.

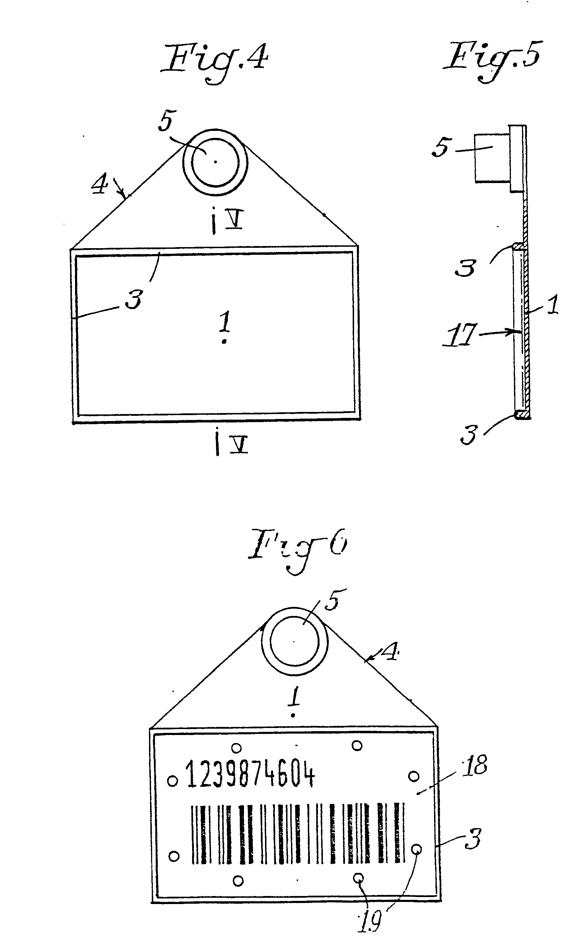

Dans le mode de réalisation d'un élément femelle montré aux figures 4 et 5, les indications d'identité que l'on fait figurer dans le cadre 3 prévu à cet effet sont protégées par un film 17 de matière plastique transparente ; dans celui représenté à la figure 6, le code-barre constituant ces indications est protégé par une mince couche de matière plastique transparente 18, coulée dans ce cadre 3 et pénétrant dans des trous 19, prévus à cet effet dans la face antérieure de l'élément femelle, et assurant son ancrage.

## Revendications

1. Plaquette d'idenfication, notamment pour le bétail, à fixation irréversible, formée principalement à partir d'une matière souple, telle que du plastique, et constituée :

a) d'un élément plat, ou plaquette, mâle (8) venu de moulage avec un tube (9) perpendiculaire à l'une (D) de ses faces, le trou cylindrique du tube étant prolongé à travers l'élément mâle et l'extrémité libre (10) du tube portant une pointe conique (13) externe de perçage, en matière plus dure, prolongée par une queue (15), qui s'encastre dans le trou cylindrique du tube (9), et est percée axialement d'un trou borgne (16), qui s'étend jusqu'à proximité d'une gorge circulaire (14) externe disposée à la base de la partie conique de la pointe (13) avant la queue (15) et dans laquelle vient par moulage s'introduire une saillie interne, de profil correspondant, de l'extrémité (10) du tube (9),

b) et d'un élément plat, ou plaquette femelle (1) moulée présentant un brossage (5) percée d'un trou borgne (6) à l'orée duquel est placée une rondelle fendue (7) de retenue, de diamètre interne identique à celui du trou borgne (6), ledit trou borgne (6) étant dimensionné de manière à pouvoir recevoir la pointe (13) de perçage après introduction forcée de cette dernière dans l'élément femelle, caractérisée en ce que le tube (9) support de la plaquette mâle présente extérieurement une surface lisse, la base de la partie conique externe de la pointe dure (13) étant de diamètre égal à celui extérieur du tube (9), ces diamètres égaux étant légèrement supérieurs à celui du trou borgne (6) de l'élément femelle (1), en ce que le trou borgne (6) de l'élément femelle (1) est cylindrique, dépourvu d'épaulements, et en ce que le profil de la gorge circulaire de la pointe (14) est trapézoïdal.

2. Plaquettes suivant la revendication 1, caractérisées en ce que la plaquette femelle (1) est de forme rectangulaire surmontée d'une partie triangulaire portant le bossage (5) et l'élément mâle (8) de la plaquette est de forme identique.

3. Plaquettes suivant la revendication 1, caractérisées en ce que la plaquette femelle (1) et son élément mâle (8) présentent des perçages ou des nervures pour la fixation des fiches d'immatriculation.

## Claims

1. An identification tag, in particular for livestock, which is attached in an irreversible manner, formed substantially of a flexible material, such as plastics, and comprising :

a) a flat male element or tag (8) formed integrally with a tube (9) perpendicular to one of its faces (D), the cylindrical hole of the tube being extended through the male element and the free end (10) of the tube being provided with an external piercing conical tip (13) of a harder material and extended by a shank (15) which is fitted into the cylindrical hole of the tube (9) and is pierced axially by a blind hole (16) which extends approximately as far as an outer circular groove (14) disposed at the base of the conical portion of the tip (13) forward of the shank (15) and into which is inserted an integrally formed inner projection, of corresponding section, at the end (10) of the tube (9),

b) and flat element, or moulded female tag (1), having a projection (5) pierced by a blind hole (6) at the edge of which is placed a split retaining washer (7) whose internal diameter is identical to that of the blind hole (6), the dimensions of said blind hole (6) being such that it can accommodate the piercing tip (13) after the latter has been forcibly inserted into the female element, characterised in that externally the support tube (9) for the male tag has a smooth surface, the base of the external conical portion of the hard tip (13) being of a diameter equal to the outside diameter of the tube (9), these equal diameters being slightly greater than that of the blind hole (6) of the female element (1) is cylindrical without shoulders, and in that the section of the circular groove in the tip (14) is trapezium-shaped.

2. Tags according to Claim 1, characterised in that the femal tag (1) is of rectangular shape surmounted by a triangular portion carrying the projection (5) and the male element (8) of the tag is of identical shape.

3. Tags according to Claim 1, characterised in that the female tag (1) and its male element (8) are provided with perforations or ribs for attaching registration cards.

## Patentansprüche

1. Kennzeichnungsplakette, insbesondere für Vieh, zur unlösbaren Befestigung, die im wesentlichen aus einem biegsamen Material, wie Kunststoff, gebildet ist und folgende Bestandteile aufweist :

a) ein flaches oder plattenförmiges Einsteckteil (8), das durch Formguß hergestellt ist, mit einem senkrecht zu einer (D) seiner Stirnseiten angeordneten Rohr (9), wobei der zylindrische Innenraum des Rohrs sich durch das Einsteckteil erstreckt und das freie Ende (10) des Rohrs außerhalb der Bohrung eine konische Spitze (13) aus härterem Material trägt, die durch ein Endstück (15) verlängert ist, das in dem zylindrischen Innenraum des Rohrs (9) eingesetzt ist und ein axiales Sackloch (16) aufweist, das sich bis in die Nähe einer äußeren ringförmigen Verengung (14) erstreckt, die an der Basis der konischen Spitze (13) vor dem Endteil (15) angeordnet ist und in die ein durch Formguß hergestellter, nach innen weisender Vorsprung entsprechenden Profils des freien Endes (10) des Rohrs (9) eingreift,

b) ein flaches oder plattenförmiges, durch Formguß hergestelltes aufnehmendes Teil (1), das ein vorstehendes Teil (5) mit einem dieses durchtretenden Sackloch (6) aufweist, in dessen Randbereich eine ringförmige Rückhaltescheibe (7) angeordnet ist, deren innerer Durchmesser dem des Sackloches (6) entspricht, wobei das Sackloch (6) so dimensioniert ist, daß es die Spitze (13) nach deren erzwungenen Eintritt in das aufnehmende Teil aufnehmen kann, dadurch gekennzeichnet, daß das von dem Einsteckteil getragene Rohr (9) eine glatte Oberfläche aufweist, wobei der konische äußere Teil der harten Spitze (13) den gleichen Durchmesser wie der Außenmantel des Rohrs (9) hat und diese gleichen Durchmesser etwas größer als der des Sackloches (6) des aufnehmenden Teils (1) sind, daß das Sackloch (6) des aufnehmenden Teils (1) zylindrisch und frei von Vorsprüngen ist, und daß das Profil der ringförmigen Verengung (14) der Spitze trapezförmig ist.

2. Kennzeichnungsplakette nach Anspruch 1, dadurch gekennzeichnet, daß das aufnehmende Teil (1) rechtwinklig ausgebildet ist mit einem daran anschließenden, das vorstehende Teil (5) tragenden dreieckigen Bereich und daß das Einsteckteil (8) der Plakette eine identische Form aufweist.

3. Kennzeichnungsplakette nach Anspruch 1, dadurch gekennzeichnet, daß das aufnehmende Teil (1) und sein Einsteckteil (8) Bohrungen oder Rippen zur Befestigung von Eintragungskarten aufweisen.

## Fig.1

## Fig. 2

1

*Fig.3*

*Fig.4*

*Fig.5*

*Fig 6*

12398746 04